# EUROPÄISCHE PATENTSCHRIFT

(11) **EP 1 458 463 B1**
(45) Veröffentlichungstag und Bekanntmachung des Hinweises auf die Patenterteilung: **06.12.2006**
(21) Anmeldenummer: 02795175.5
(22) Anmeldetag: 12.12.2002
(51) Int. Cl.: B01D 63/02, B01D 65/00

(54) **VERFAHREN ZUR HERSTELLUNG EINES HOHLFASERMEMBRANMODULS UND HOHLFASERMEMBRANMODUL**
METHOD FOR THE PRODUCTION OF A HOLLOW-FIBER MEMBRANE MODULE AND HOLLOW-FIBER MEMBRANE MODULE
PROCEDE DE PRODUCTION D'UN MODULE MEMBRANE A FIBRES CREUSES ET MODULE MEMBRANE A FIBRES CREUSES

(30) Priorität: 18.12.2001 DE 10162356
(43) Veröffentlichungstag der Anmeldung: 22.09.2004
(73) Patentinhaber: MANN+HUMMEL GmbH, 71638 Ludwigsburg (DE)
(72) Erfinder: GERLACH, Karin, D-71606 Möglingen (DE); HARTMANN, Uwe, D-74343 Sachsenheim (DE); HEILMANN, Carola, D-71384 Weinstadt (DE); MICKE, Michael, D-71334 Waiblingen (DE); TUDYKA, Stefan, D-71642 Ludwigsburg (DE); URBAHN, Arndt, D-71642 Ludwigsburg (DE)
(74) Vertreter: Voth, Gerhard
(86) Internationale Anmeldenummer: PCT/EP2002/014170
(87) Internationale Veröffentlichungsnummer: WO 2003/051495

(56) Entgegenhaltungen:
- WO-A-01/85315
- DE-A- 3 942 659
- US-A- 4 190 411
- US-A- 6 113 782
- PATENT ABSTRACTS OF JAPAN vol. 1999, no. 05, 31. Mai 1999 (1999-05-31) -& JP 11 033365 A (ASAHI CHEM IND CO LTD), 9. Februar 1999 (1999-02-09) in der Anmeldung erwähnt
- PATENT ABSTRACTS OF JAPAN vol. 014, no. 261 (C-0725), 6. Juni 1990 (1990-06-06) -& JP 02 075331 A (NOK CORP), 15. März 1990 (1990-03-15)

## Beschreibung

### Stand der Technik

Die Erfindung betrifft ein Verfahren zur Herstellung eines Hohlfasermembranmoduls nach Anspruch 1, eine Vorrichtung zur Herstellung eines Hohlfasermembranmoduls nach Anspruch 6 und ein Hohlfasermembrarimodul nach Anspruch 9.

Verfahren zur Herstellung von Hohlfasermembranmodulen der eingangs beschriebenen Art sind z.B. aus der JP 110 333 65 bekannt. Dieses Dokument offenbart ein Verfahren und eine Vorrichtung zur Herstellung eines Hohlfasermembranmoduls. Bei diesem Verfahren werden Hohlfasern in ein rohrförmiges Gehäuse eingebracht. Das Gehäuse wird an seinen Stirnseiten mit jeweils einer Kappe verschlossen. Dieses vormontierte Hohlfasermembranmodul wird mittig auf einer Zentrifuge montiert.

Die Zentrifuge, welche die Vorrichtung zur Herstellung eines Hohlfasermembranmoduls bildet, verfügt über Verbindungsleitungen, welche das Hohlfasermembranmodul mit zwei Speicherbehälter verbinden. In dem ersten Speicherbehälter befindet sich ein Klebstoff. Dieser erste Speicherbehälter ist über die erste Verbindungsleitung mit den stirnseitig angeordneten Kappen des Hohlfasermembranmoduls verbunden. Der zweite Speicherbehälter, welcher organisches Material enthält, ist mit dem Gehäuse des Hohlfasermembranmoduls verbunden. In den Verbindungsleitungen sind Ventile angeordnet, welche über eine Druckluftleitung betätigt werden.

Die Zentrifuge wird in Rotation versetzt und die Inhalte der Speicherbehälter werden in das Hohlfasermembranmodul geleitet. Der Klebstoff des ersten Behälters verklebt die Hohlfasern mit dem Gehäuse und den Kappen. Das organische Material, des zweiten Speicherbehälters bildet eine Deckschicht auf dem Klebstoff. Durch die Rotation der Zentrifuge werden innerhalb des Hohlfasermembranmoduls konstante Schichtdicken erzielt.

Nachteilig bei diesem Verfahren ist, dass der Kleber in das Innere der Hohlfasern gelangen und diese verschließen kann. Dadurch wird die Filtrationsfähigkeit des Hohlfasermembranmoduls reduziert. Weiterhin zersetzt sich der Kleber und das organische Material bei höheren Temperaturen.

Aufgabe der Erfindung ist es daher, ein Verfahren und eine Vorrichtung zur Herstellung eines Hohlfasermembranmoduls zu schaffen, welches in seiner Filtrationseigenschaft nicht beeinträchtigt und für den Einsatz z.B. bei extrem hohen Temperaturen bzw. anderen extremen Bedingungen geeignet ist. Diese Aufgabe wird durch die Merkmale des Patentanspruches 1 und des Patentanspruchs 6 gelöst.

### Vorteile der Erfindung

Bei dem erfindungsgemäßen Verfahren zur Herstellung eines Hohlfasermembranmoduls welches zur Gastrennung oder anderen Separationsverfahren bei erhöhten Temperaturen eingesetzt werden kann, werden zuerst Hohlfasern, insbesondere Hohlfaserbündel, welche aus einer Vielzahl von Hohlfasern bestehen, in ein Gehäuse eingebracht. Die Hohlfasern bestehen aus einem anorganischen, insbesondere keramischen Material, wobei sie über eine poröse Wand verfügen, welche für ein Fluid durchlässig, jedoch für Verunreinigungen undurchlässig ist. Hierzu können die eingesetzten Hohlfasern aus einem gasselektiven Material bestehen bzw. derart beschichtet sein, dass andere nicht erwünschte Bestandteile, wie z.B. Stickstoff bei der Abtrennung von Sauerstoff aus Luft oder Kohlendioxid bei der Abtrennung von Wasserstoff aus einem Kohlendioxid enthaltendem Wasserstoff-Gemisch, zurückgehalten werden. Dem Fachmann stehen hierzu verschiedene anorganische aber auch organische Materialien wie z.B. Zeolithe, Perowskite, Edelmetalle oder andere zur Verfügung. Als Beispiel für organische Materialien sollen hier die Polysulfone, Silikone oder Polyanilin angeführt werden. Natürlich ist jedes andere gasselektive, organische oder anorganische Material denkbar. Diese Hohlfasern können durch beliebige bekannte Herstellungsverfahren erzeugt werden und beliebige, insbesondere kreisförmige Querschnitte aufweisen. Weiterhin können die Hohlfasern beschichtet sein, wodurch bestimmte Filtrationseigenschaften erzeugt werden können. Das Gehäuse ist ein Hohlkörper aus einem temperatureständigen, insbesondere hochtemperaturbeständigen Material wie z.B. Metall oder Keramik, welcher insbesondere zylindrisch ausgeführt ist, wobei das Gehäuse aus mehreren Gehäuseteilen bestehen kann.

Die Gehäuseteile können durch unterschiedliche Materialien bzw. Materialkombinationen gebildet sein. Dieses Gehäuse ist für den Einsatz bei sehr hohen Temperaturen, insbesondere im Bereich von 400°C bis 1200°C geeignet. Hierbei ist die zylindrische Form des Gehäuses nicht auf kreiszylindrische Ausgestaltungen beschränkt. Es können z.B. auch ovale, polygone, drei- oder vieleckige Zylinder verwendet werden. Das Gehäuse ist an mindestens einer Seite offen, durch welche die Hohlfasern in das Innere des Gehäuses eingebracht werden können. Diese offene Seite kann insbesondere eine Stirnseite sein, welche mit mindestens einer Kappe verschlossen wird. Bei Ausführungen, welche über zwei offene Stirnseiten verfügen, werden beide Stirnseiten mit jeweils einer Kappe verschlossen. Die Kappe kann lösbar, insbesondere durch verschrauben, mit dem Gehäuse verbunden werden. Das mit den Hohlfasern gefüllte Gehäuse wird auf eine Vorrichtung montiert, welche zur Herstellung des Hohlfasermembranmoduls vorgesehen ist. Hierbei kann das Gehäuse exakt mittig bzw. symmetrisch, bezogen auf die Rotationsachse, auf der Vorrichtung montiert werden, wodurch an beiden Stirnseiten die gleichen Bedingungen, insbesondere die gleichen Zentrifugalkräfte, herrschen. Somit können beide Stirnseiten zeitgleich mit den jeweiligen Massen gefüllt werden. Eine besondere Ausgestaltung der symmetrisch montierten Gehäuse sieht vor, dass mehrere Gehäuse in verschiedenen Ebenen auf der Vorrichtung montiert werden. Bei einer anderen Variante ist das Gehäuse derart auf der Vorrichtung montiert, dass nur eine Stirnseite gefüllt werden kann. Hierbei können dann jedoch mehrere Gehäuse in einer Ebene auf der Vorrichtung montiert werden. Nach der Fertigstellung der ersten Stirnseite ist dann das Gehäuse umzudrehen, damit die andere Stirnseite bearbeitet werden kann. Das montierte Gehäuse wird mit Anschlüssen an einem Leitungssystem, in welchem die in das Gehäuse einzubringenden Massen enthalten sind, verbunden.

Diese Vorrichtung versetzt das montierte Gehäuse in Rotation. Die Drehzahl mit welcher die Vorrichtung das Gehäuse rotiert, ist abhängig von den Eigenschaften, insbesondere von der Viskosität, der zu verarbeitenden Massen. Bei mittel - bis hochviskosen Massen, insbesondere mit Viskositäten von mindestens 1Pas, sind Drehzahlen von ca. 700 -1500 Umdrehungen /min notwendig. Bei niederviskosen Flüssigkeiten sind auch geringere Umdrehungszahlen ausreichend.

Sobald die Vorrichtung das Gehäuse mit der erforderlichen Drehzahl rotiert wird als erstes eine Verödungsmasse im Bereich der Kappen in das Gehäuse eingebracht. Diese Verödungsmasse verschließt die Hohlfasern in ihren stirnseitigen Endbereichen vollständig. Hierbei werden alle Hohlfasern in ihrem Endbereich ca. 1 bis 5mm von der Verödungsmasse umschlossen. Durch die Rotation des Gehäuses mit den Hohlfasern und Kappen wird verhindert, dass die Verödungsmasse durch Kapilarkräfte zu weit in die Hohlfasern hineingesogen wird. Die Verödungsmasse besteht vorzugsweise aus einer temperaturbeständigen Polymermasse, wie z.B. Polysulfon, Polyethersulfon, Polyester, Polyamid oder Polyimid. Diese Polymermasse kann als Schmelze, Granulat, Pulver oder Polymerlösung in das Gehäuse eingebracht werden, wobei darauf zu Achten ist, dass die Prozessparameter derart gewählt werden, dass die Polymermasse die Hohlfaserenden dicht umschließt. Dies wird vorteilhafterweise dadurch erreicht, dass Wärme zugeführt wird, welche das Granulat oder Pulver aufschmilzt, wodurch die Schmelze die Hohlfaserenden umschließen kann. Bei der Verwendung von Granulat oder Pulver könnte dieses bereits bei der Montage der Kappe eingefüllt werden und erst bei der entsprechenden Drehzahl durch Wärmezufuhr aufgeschmolzen werden.

Bei der Verwendung einer Polymerlösung als Polymermasse, bei welcher das Polymer in einem Lösungsmittel gelöst vorliegt, muss nach dem Einschleudern der Polymerlösung in die Gehäuseenden im Bereich der Kappen, in einem Zwischenschritt dann das Lösungsmittel durch Verdunsten durch z.B. Aufheizen, aus der Polymerlösung entfernt werden. Die benötigte Temperatur zum Verdunsten des Lösungsmittels ist abhängig vom eingesetzten Lösungsmittel.

Nachdem die Polymermasse die Hohlfaserenden umschlossen hat, werden die Prozessparameter derart modifiziert, insbesondere durch Abkühlen, dass die Verödungsmasse hart wird.

Nachdem die Verödungsmasse in ausreichendem Maße erstarrt ist, wird eine Vergussmasse in das Gehäuse eingebracht. Die Vergussmasse wird bei relativ hohen Drehzahlen über einen Zulauf in das Gehäuse eingebracht, wobei der Zulauf im Endbereich des Gehäuses angeordnet ist. Die Vergussmasse wird durch die Rotation des Gehäuses gegen die erstarrte Verödungsmasse gedrückt. Ein Eintreten der Vergussmasse und somit ein irreversibles Verschließen der Hohlfaser wird durch die Verödung erfolgreich verhindert. Durch die Rotation des Gehäuses erzielt man eine konstante Schichtdicke der eingebrachten Masse. Dies gilt sowohl für die Vergussmasse, als auch für die Verödungsmasse und eine nachfolgend aufgebrachte Dichtungsmasse.

Durch Einsatz der erfindungsgemäßen Rotationstechnologie kann eine bevorzugte Schwindung der Materialien in eine Raumrichtung zumindest teilweise erzwungen werden. Die Auftretenden Zentrifugalkräfte während der Rotation bevorzugen einen Schrumpf in axialer Richtung der Rotation. Als Resultat findet eine Schwindung im Verhältnis schwächer ausgeprägt orthogonal zur Achse statt, was eine Haftung der Materialien am Gehäusematerial begünstigt. Gleiches gilt für den erfindungsgemäßen Einsatz der nachfolgend beschriebenen Dichtungsmaterialien.

Die Vergussmasse besteht aus einem chemisch- und hochtemperaturbeständigen, insbesondere größer 350°C beständigen, anorganischen Material. Dieses Material kann z.B. Polysilazane, Quarz, Natriumsilikat, Zirkonsilikat, Zirkonoxid, Aluminiumoxid oder Siliziumoxid, aufweisen, wobei die Anteile in beliebigen Mischungsverhältnissen vorliegen können und bei besonderen Ausgestaltungen bis zu 100% betragen können. Dieses anorganische Material muss ein gutes Fließverhalten, insbesondere mit einer Viskosität von kleiner 15Pas aufweisen, wobei hierzu geeignete Zusatzstoffe beigemengt werden können. Solche Zusatzstoffe können z.B. Wasser sein. Weiterhin müssen die Vergussmassen eine möglichst minimale Schwindung zwischen der Verarbeitung (flüssige Form), der Trocknung bzw. Vorhärtung und dem anschließenden Verfestigen (Sintern) aufweisen. Hierbei wird eine Schwindung kleiner 2% in jede Raumrichtung bevorzugt. Sehr wichtig für die gewünschte Dichtigkeit ist ein möglichst gleicher Wärmeausdehnungskoeffizient der aneinander angrenzenden Bereiche, insbesondere der Vergussmasse zur Hohlfaser und dem Gehäuse.

Die eingebrachte Vergussmasse wird, insbesondere bei etwas reduzierter Drehzahl temperaturbehandelt. Hierbei ist die Temperatur derart zu wählen, dass die Vergussmasse aushärtet, jedoch die Verödungsmasse nicht erweicht bzw. beschädigt wird. Diese Temperatur liegt daher vorzugsweise im Bereich von 150 bis 200°C.

Da die ausgehärtete Vergussmasse nicht gasdicht ist, wird eine Dichtungsmasse aufgebracht, welche aus einem anorganischen Sol besteht. Das Sol kann unter Rotation und Temperaturbehandlung in ein Gel und anschließend in eine feste Schicht, z.B. ein Glas überführt werden. Weiterhin können aber auch Einbrennlacke, welche einen geeigneten Wärmeausdehnungskoeffizienten aufweisen und bei den Prozesstemperaturen verarbeitbar sind, verwendet werden. Die Dichtungsmasse erhält, insbesondere durch eine thermische Behandlung ihre erforderliche Dichtigkeit. Diese Dichtungsmasse wird bei einer mittleren Drehzahl eingebracht, wobei sie in Poren, Risse und Kavitäten der Vergussmasse eindringt und so eine Abdichtung erzeugt. Um die erforderliche Menge der Dichtungsmasse möglichst gering zu halten, sollte die Vergussmasse nach dem Aushärten eine möglichst geringe Porosität aufweisen. Dadurch wird auch ein zu starkes Eindringen der Dichtungsmasse in die Vergussmasse vermieden, wodurch die erforderliche Menge an Dichtungsmasse möglichst gering gehalten wird. Weiterhin sollten beim Aushärten möglichst keine Risse oder Kavitäten in der Vergussmasse gebildet werden. Die Dichtungsmassen-Schicht sollte eine möglichst dünne Schicht sein, welche kleiner 1 mm ist. Die Dichtungsmasse kann z.B. auf Basis von Siloxan, Polysilazanen oder Aluminiumhydroxid hergestellt sein. Derartige Dichtungsmassen sind z.B. bei der Fa. Nano-TechCoatings GmbH, Deutschland unter der Bezeichnung "Clearcoat" oder "Metalcoat" erhältlich.

Weiterhin können als Dichtungsmasse auch polymere Werkstoffe verwendet werden. Diese weisen naturgemäß nur eine geringere thermische und chemische Beständigkeit auf, können aber für bestimmte Anwendungsfälle ausreichend sein. Bevorzugt werden polymere Werkstoffe, welche eine hohe thermische und chemische Beständigkeit aufweisen und in einem Lösungsmittel löslich sind. Beispiele hierfür sind z.B. Polysulfon, Polyethersulfon, Polyphenylensulfon, Polyetherketon, Polyetheretherketon, Polyimid. In dieser Ausgestaltung wird das gelöste Polymer als Dichtungsmasse auf die Vergussmasse unter Rotation aufgebracht und das Lösungsmittel, ebenfalls unter Rotation, abgedampft. Dies führt zu einer Dichten polymeren Schicht, welche für viele Anwendungen eine ausreichende Beständigkeit aufweist.

Weiterhin ist es mit der erfindungsgemäßen Ausgestaltung möglich, pulverförmige Polymere direkt in die Schleuder einzubringen. Hierbei wird das Polymer dann auf die Vergussmasse unter Rotation in einer dünnen Schicht aufgeschmolzen.

Nachdem die flüssige Dichtungsmasse eingebracht wurde, muss die Dichtungsmasse getrocknet werden, hierbei wird beispielsweise das Sol in ein Gel umgewandelt. Dies kann z.B. durch eine kurze Wartezeit, insbesondere bei etwas erhöhter Temperatur von ca. 60°C erzielt werden, oder durch ein Spülen des Gehäuses mit angewärmten Innertgas. Durch das Einbringen der Dichtungsmasse und einem oder mehreren optionalen, daran anschließenden Temperaturschritten, wird die Verbindung zwischen den Hohlfasern, der Vergussmasse und dem Gehäuse gasdicht, insbesondere bis zu Drücken von 30bar.

Nachdem alle eingebrachten Massen ausreichend gefestigt sind, werden die Anschlüsse von dem Gehäuse entfernt und die Kappe(n) abgenommen. Zur leichteren Entfernbarkeit können die Kappen vor der Montage mit einem Trennmittel, wie z.B. einem Graphitspray, eingestrichen oder eingesprüht werden. Anschließend wird die Verödungsmasse von den Hohlfasern und der Vergussmasse entfernt. Dies kann z.B. durch mechanisches Abtrennen erfolgen, wobei die von der Verödungsmasse umschlossenen Hohlfaserenden mit abgetrennt werden. Weiterhin kann die Verödungsmasse aber auch durch ein chemisches Verfahren entfernt werden. Nachdem die Hohlfasern durch das Entfernen der Verödungsmasse wieder über offene Endbereiche verfügen, werden Anschlussplatten mit dem Gehäuse verbunden. An diesen Anschlussplatten sind Einlässe oder Auslässe angeordnet, welche z.B. mit Innengewinde oder Muffen an der Anschlussplatte fixiert sind. Die Ein- bzw. Auslässe können z.B. mit Metall- oder Graphitdichtungen abgedichtet werden. Der Vorteil des erfindungsgemäßen Verfahrens liegt darin, dass die Hohlfaserenden zunächst kontrolliert verschlossen werden und dieser Verschluss, welcher durch die Verödungsmasse gebildet wird, wieder entfernt wird. Somit ist erreicht, dass die Hohlfasern des Hohlfasermembranmoduls im Einsatz offen sind, wodurch eine effektive Filtration erzielt wird.

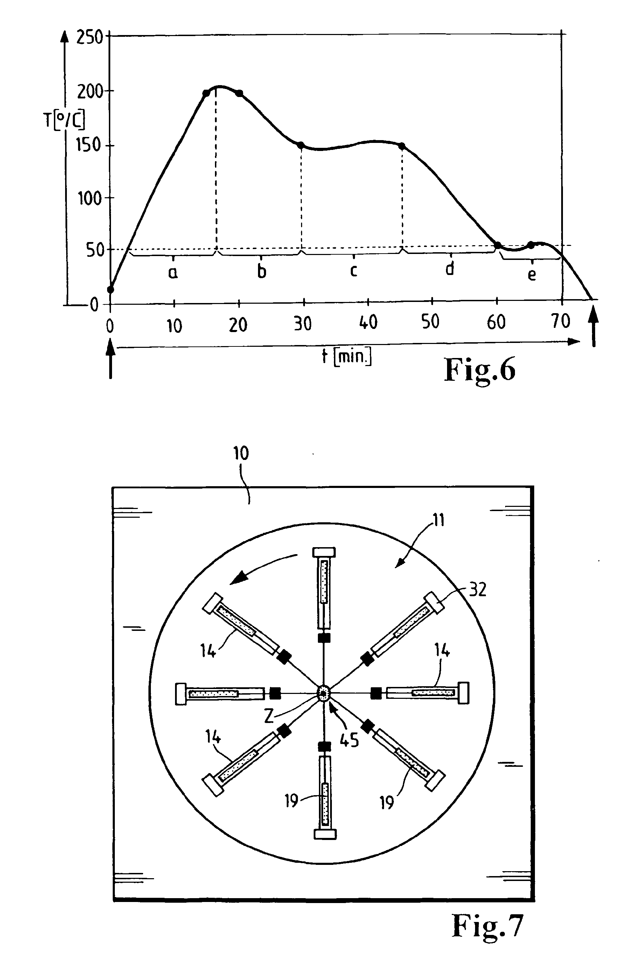

Mit dieser Anordnung und einem geeigneten Temperaturregime, wie es insbesondere in Figur 6 ist, kann, ohne den Vorgang zu unterbrechen, die Verödungsmasse, Vergussmasse und die Dichtungsmasse hintereinander in das Modulgehäuse eingebracht werden. Auch möglich ist die abschließende Sinterung der Vergussmasse und der Dichtungsmasse bei hohen Temperaturen in einem Ofen. Hierzu wird nach der Zugabe und Erstarrung der Verödungsmasse die Vergussmasse zugeführt und bis zur Formstabilität, vorzugsweise bei ca. 25° - 500°C vorgehärtet. Anschließend wird das Vorläufermodul aus der Schleuder entnommen, gesintert und für die Zugabe der Dichtungsmasse nochmals in die Schleuder eingebracht.

Gemäß einer weiteren Ausgestaltung der Erfindung wird zwischen der Kappe und den Hohlfasern ein für die Verödungsmasse durchlässiger Einsatz, insbesondere eine Metallgewebeplatte oder eine offenporöse Sinterplatte, angeordnet. Dieser Einsatz stützt die Hohlfasern ab, damit sie in axialer Richtung spielfrei in dem Gehäuse gelagert sind. Durch das Einbringen der Verödungsmasse wird zunächst der Einsatz mit der Verödungsmasse getränkt. Es wird weitere Verödungsmasse zugeführt, bis auch die Hohlfaserenden vollständig mit der Verödungsmasse verschlossen sind, wobei die Verödungsmasse auch ca. 1 bis 2mm in das Innere jeder Hohlfaser eindringt. Beim Entfernen der Verödungsmasse wird auch der Einsatz mit entfernt. Durch die Verwendung des Einsatzes ist gewährleistet, dass die Verödungsmasse in alle Hohlfaserenden eindringen kann und einen gleichmäßigen Verschluss der Hohlfasern bewirkt.

Es ist vorteilhaft, dass die Verödungsmasse mit einer Wärmebehandlung, insbesondere einem Sinterprozess entfernt wird. Durch die Wärmebehandlung, bei welcher die Temperaturen derart gewählt werden, dass die Verödungsmasse abschmilzt oder abbrennt, werden gleichzeitig die Vergussmasse und die Dichtungsmasse ausgehärtet bzw. versintert, wodurch diese ihre erforderlichen Eigenschaften, insbesondere Hochtemperaturbeständigkeit, erhalten. Es ist jedoch auch denkbar, dass bei geringeren Temperaturen von z.B. 400°C zuerst die Verödungsmasse thermisch entfernt wird und anschließend, entsprechend den eingesetzten Massen, Sintertemperaturen von z.B. 500 bis 900°C erzeugt werden, welche die Vergussmasse und die Dichtungsmasse aushärten. Durch das thermische Entfernen der Verödungsmasse kann ein mechanischer Arbeitsschritt eingespart werden. Alternativ zu den thermischen bzw. mechanischen Verfahren, kann die Verödungsmasse auch chemisch entfernt werden. Weiterhin kann der von der Verödungsmasse getränkte Einsatz wieder verwendet werden.

Gemäß einer Weiterbildung des erfindungsgemäßen Verfahrens werden die, nach einer thermischen Entfernung der Verödungsmasse über die Vergussmasse überstehenden, Hohlfaserenden abgebrochen. Dadurch erhält man eine ebene Fläche, an welcher alle Hohlfasern offen sind.

Zur Durchführung des erfindungsgemäßen Verfahrens wird eine Vorrichtung vorgeschlagen, welche zur Herstellung eines Hohlfasermembranmoduls dient. Diese Vorrichtung verfügt über einen Motor, welcher mit einem Schleuderraum verbunden ist und diesen in Rotation versetzt. In dem Schleuderraum ist eine Aufnahme angeordnet, in welche das Gehäuse des Hohlfasermembranmoduls eingesetzt und fixiert werden kann. Weiterhin verfügt die Vorrichtung über ein Leitungssystem mit welchem die Vergussmasse, die Verödungsmasse und die Dichtungsmasse zudosiert werden. Hierzu sind in den einzelnen Leitungen Ventile angeordnet, welche z.B. pneumatisch oder elektronisch angesteuert sind. Die Leitungen sind mit dem Gehäuse bzw. der Kappe verbunden. Die Kappe ist zur Herstellung mehrerer, insbesondere zeitlich nacheinander hergestellter Hohlfasermembranmodulen vorgesehen, daher ist sie lösbar mit dem Gehäuse verbunden. Da die Kappe von dem Gehäuse abnehmbar ist, ist die Verödungsmasse, welche in direktem Kontakt zu der kappe steht zugänglich und kann entfernt werden.

Eine vorteilhafte Ausgestaltung der Vorrichtung sieht vor, dass der Schleuderraum, insbesondere im Bereich der Kappe, beheizbar ist. Eine elektrische Beheizung der Kappen ist einfach durch den Einsatz eines Schleifkontaktsystems möglich. Hierbei werden die notwendigen elektrischen Anschlüsse nach Übertragung auf den Schleifkontakt an der Welle entlang geführt und fest auf der Schleudervorrichtung fixiert. Durch diese Vorgehensweise ist ebenfalls eine Temperaturkontrolle z.B. mittels eines Temperaturfühlers möglich. Die direkte Beheizung der Kappe ermöglicht eine schnelle Einbringung der Wärme an die Stelle, an der sie erforderlich ist. Durch die Einbringung von Wärme in den Schleuderraum können extrem lange Aushärtzeiten verkürzt und Materialien, welche bei Raumtemperatur nicht zu verarbeiten sind, verarbeitet werden. Um definierte Temperaturen in dem Schleuderraum, insbesondere in den Bereichen der eingebrachten Massen zu ermöglichen sind Sensoren vorgesehen, welche die Temperatur erfassen über eine Auswertungseinheit mit der Heizung verbunden sind, wodurch ein Regelkreis gebildet wird. Durch eine geeignete Temperatursteuerung kann, wie oben bereits beschrieben, das Hohlfasermembranmodul in einem kontinuierlichen Vorgang hergestellt werden.

Bei anderen Ausführungen sind nur die Kappen an den Stirnseiten beheizbar, wodurch nicht der gesamte Schleuderraum aufgeheizt werden muss. Dies ermöglicht eine Energieersparnis.

Um Abkühlphasen z.B. bei der Aushärtung zu verkürzen, können analog zu der Wärmeeinbrinung auch Kühlvorrichtungen, wie z.B. Lüfter, welche eine Strömung durch den Schleuderraum erzeugen, vorgesehen sein, welche sowohl den gesamten Schleuderraum, oder auch nur die Endbereiche des Gehäuses kühlen können. Weiterhin ist es möglich die Kappen so auszuführen, dass diese mit Kühlrippen versehen sind. Dies beschleunigt vor allem in Kombination mit Lüftern die Abkühlung der Kappen erheblich.

Um keine zu großen Wärmeverluste zu erhalten kann der Schleuderraum thermisch isoliert sein, was mit einer Kammer realisiert sein kann. Diese Kammer ist öffenbar gestaltet, damit das Gehäuse mit den Hohlfasern und der Kappe eingebracht werden kann. Hierbei kann die Kammer als Deckel ausgeführt sein, welcher auf einer Drehscheibe bzw. einem Rotor fixiert werden kann, oder über Türen verfügen, welche zur Montage des Gehäuses geöffnet werden können.

Es ist vorteilhaft, dass der Schleuderraum gasdicht ausgeführt ist, wodurch ein Heizgas in den Schleuderraum eingebracht werden kann, welches nach der Wärmezuleitungsphase wieder entfernt werden kann. Dadurch können Gase verwendet werden, welche nicht in die Umgebungsluft gelangen dürfen. Außerdem wird die Wärmeenergie bestmöglich ausgenutzt.

Ein Hohlfasermembranmodul, welches zur Reinigung bzw. Gastrennung oder chemischen Umsetzung eines gasförmigen oder flüssigen Fluids vorgesehen ist und nach dem erfindungsgemäßen Verfahren hergestellt wurde, weist ein Gehäuse auf, in welchem Hohlfasern, insbesondere eine Vielzahl von Hohlfasern angeordnet sind. * Die Hohlfasern bestehen aus einem anorganischen Material, wobei dieses durch Beschichtungen an die jeweilige Filtrationsaufgabe angepasst werden kann. Um mit dem Hohlfasermembranmodul extreme Filtrationsaufgaben zu lösen sind die Hohlfasern und das Gehäuse aus Materialien, welche eine hohe chemische und thermische Beständigkeit aufweisen. Hierbei kann für das Gehäuse z.B. Edelstahl, Spezialedelstahl, wie z.B. Alloy 42 der Fa. Carpenter, welcher einen Wärmeausdehnungskoeffizienten ähnlich dem von Keramik aufweist, oder Oxid- oder Nichtoxidkeramik verwendet werden. Die übrigen verwendeten Materialien sind ebenfalls sehr beständig, so dass das Hohlfasermembranmodul zur Filtration bei Temperaturen bis zu 1200°C und/oder zur Filtration von Lösungsmitteln oder extrem sauren bzw. basischen Chemikalien eingesetzt werden kann. Hierbei sind die Hohlfasern vorzugsweise aus einem keramischen Werkstoff, welcher gegenüber abbrasiven Medien, wie z.B. Kühlschmiermitteln eine hohe Beständigkeit aufweist. Das Hohlfasermembranmodul kann zu Mikrofiltrations-, Ultrafiltrations-, Nanofiltrations- und Gastrennungsverfahren aber auch für chemische Umsetzungen, wie z.B. katalytische Verfahren, eingesetzt werden.

Die Hohlfasern sind mit einer Vergussmasse, insbesondere auf Basis von Aluminiumoxid in dem Gehäuse fixiert. Da die Vergussmasse in den meisten Fällen nicht fluiddicht ist, wird eine Dichtungsmasse aus z.B. Glas auf die Vergussmasse aufgebracht Das Hohlfasermembranmodul verfügt über einen Einlass, durch welchen ein Fluid in das Hohlfasermembranmodul einströmt, einen Auslass, durch welchen das aufkonzentrierte Fluid ausströmt und einen Permeatauslass, durch welchen das durch die Hohlfaser hindurchgetretene Permeat aus dem Hohlfasermembranmodul ausströmt. Das Gehäuse ist mit einem Flansch verschlossen, wobei vorzugsweise beide Stirnseiten des Gehäuses mit jeweils einem Flansch verschlossen sind. Der Flansch wird erst mit dem Gehäuse verbunden, wenn die Vergussmasse und die Dichtungsmasse eingebracht sind und die Verödungsmasse entfernt ist. Bei anderen Ausführungen werden die Flansche vor dem Einbringen der Vergussmasse mit dem Gehäuse verbunden. Hierbei wird dann das komplette Modul inklusive den Flanschen geschleudert. Die Schleuder muss dann derart ausgelegt sein, dass auch schwerere Module bis ca. 30kg rotiert werden können. An dem Flansch sind bei besonderen Ausgestaltungen Anschlüsse vorgesehen, welche je nach Filtrationsrichtung Permeatauslass oder Ein- und Auslass sind. Erfolgt die Filtration von außen nach innen in die Hohlfaser, so ist der Permeataulsass an dem Flansch und der Ein- bzw. Auslass an dem Gehäuse angeordnet. Hierbei ist zwischen dem Einlass und dem Auslass eine Dichtung vorzusehen, welche vorzugsweise aus einem hochtemperaturstabilem Material wie z.B: Graphit bestehen. Erfolgt die Filtration von innen nach außen, so ist der Ein- und Auslass an den Flanschen vorzusehen. Der Permeatauslass ist dann am Gehäuse anzuordnen.

Gemäß einer weiteren Ausgestaltung des Hohlfasermembranmoduls verfügt das Gehäuse aus mindestens zwei Gehäuseschalen, welche sich zumindest teilweise umschließen. Hierbei sind Dichtungsmittel vorzusehen, welche die Gehäuseschalen zueinander abdichten. Für die jeweilige Gehäuseschale kann ein geeignetes Material ausgewählt werden, welches an die jeweiligen Anforderungen angepasst ist. Vorzugsweise ist die äußere Gehäuseschale aus einem mechanisch einfach zu bearbeitenden Material, insbesondere Stahl zu fertigen. Dadurch können z.B. Gewindebohrungen vorgesehen werden, in welche Anschlüsse eingeschraubt werden können.

Bei vorteilhaften Ausgestaltungen des Hohlfasermembranmoduls weist das Material der inneren Gehäuseschale einen Wärmeausdehnungskoeffizienten auf, welcher dem der Hohlfasern entspricht. Dadurch wird der Aufbau von Wärmespannungen, welche zur Zerstörung der Hohlfasern bzw. zu Rissen oder Abtrennungen in der Vergussmasse oder der Dichtungsmasse in dem Hohlfasermembranmodul führen können, verhindert.

Gemäß einer weiteren Ausgestaltung des Hohlfasermembranmoduls besteht die äußere Gehäuseschale aus mindestens zwei Gehäusehälften, welche in axialer Richtung zusammengesetzt sind. Zwischen den Gehäusehälften sind Dichtungsmittel vorgesehen, welche insbesondere eine Abdichtung zwischen den Gehäusehälften und den Gehäuseschalen bewirken.

### Zeichnung

Weitere Einzelheiten der Erfindung werden in der Zeichnung anhand von schematischen Ausführungsbeispielen beschrieben. Hierbei zeigt
- Figur 1: einen schematischen Aufbau einer Vorrichtung zur Herstellung eines Hohlfasermembranmoduls in der Draufsicht,
- Figur 2: einen schematischen Aufbau einer Vorrichtung zur Herstellung eines Hohlfasermembranmoduls in der Seitenansicht,
- Figur 3: einen schematischen Aufbau einer alternativen Vorrichtung zur Herstellung eines Hohlfasermembranmoduls in der Draufsicht,
- Figur 4: einen schematischen Aufbau einer alternativen Vorrichtung zur Herstellung eines Hohlfasermembranmoduls in der Seitenansicht,
- Figur 5: eine Zuführleitung im Schnitt,
- Figur 6: eine Temperaturverlaufskurve,
- Figur 7: eine schematische Vorrichtung zur Herstellung mehrerer Hohlfasermembranmodulen
- Figur 8: ein schematischer Aufbau eines nicht-erfindungsgemäßen Hohlfasermembranmoduls
- Figur 9: ein schematischer Aufbau eines Hohlfasermembranmoduls im Schnitt und
- Figur 10: ein alternativer Aufbau eines Hohlfasermembranmoduls im Schnitt..

### Beschreibung der Ausführungsbeispiele

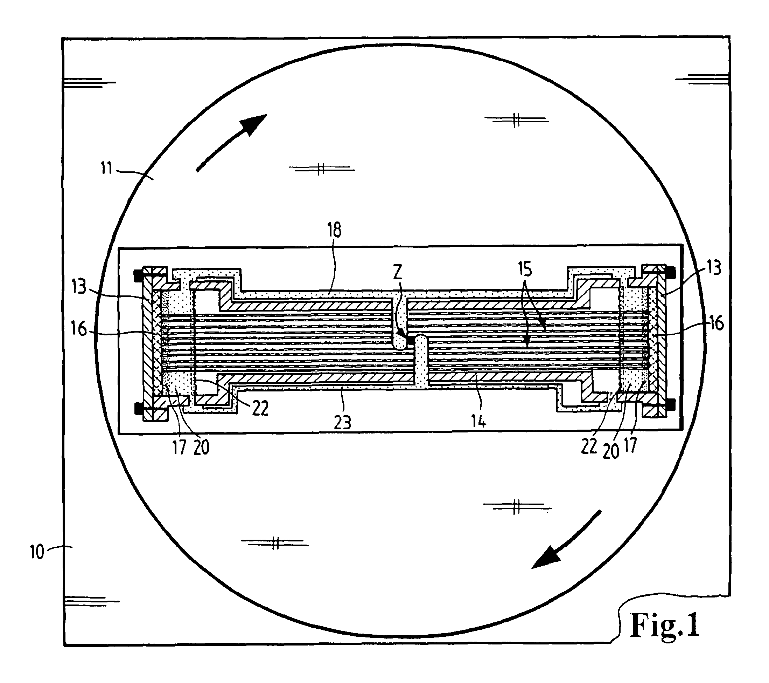

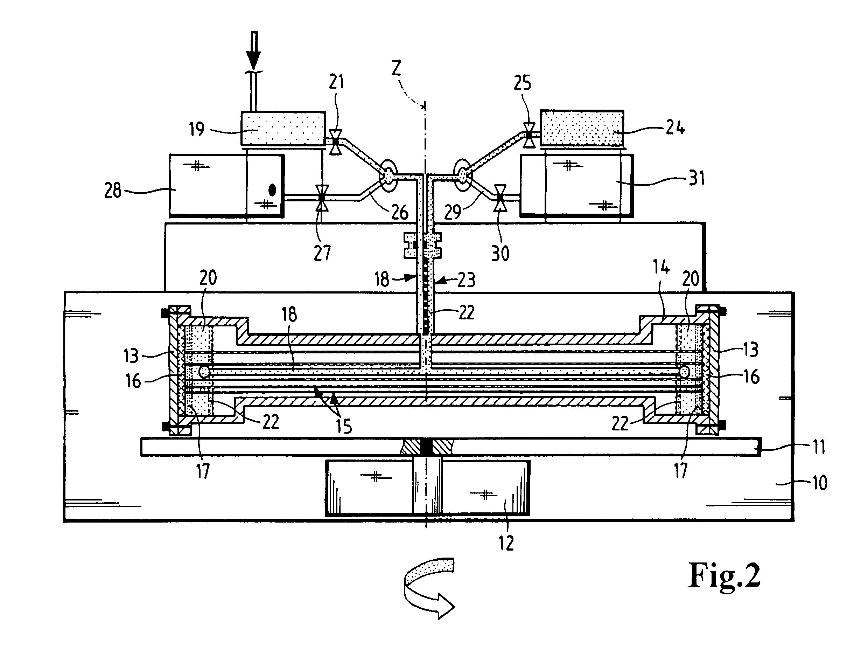

In Figur 1 ist ein schematischer Aufbau einer Vorrichtung zur Herstellung eines Hohlfasermembranmoduls in der Draufsicht und in Figur 2 in der Seitenansicht dargestellt. Die Vorrichtung verfügt über einen Schleuderraum 10, welcher beheizbar ausgeführt ist. Innerhalb des Schleuderraums 10 ist eine Drehscheibe 11 angeordnet, welche mit einem Motor 12 in Rotation versetzt werden kann. Auf der Drehscheibe 11 ist ein Gehäuse 14 angeordnet, welches mit einer Kappe 13 verschlossen ist. In dem Gehäuse 14 befinden sich Hohlfasern 15, welche aus einem keramischen Material bestehen. Die Hohlfasern 15 stützen sich an einem Metallgewebe 16 ab. Bei diesem Ausführungsbeispiel wird eine Verödungsmasse 17 in Pulverform in das Gehäuse 14 eingebracht, bevor die Kappe 13 aufgesetzt und mit dem Gehäuse 14 verschraubt wird, wobei auf beiden Seiten des Gehäuses die gleiche Menge eingebracht wird. Durch die Rotation der Drehscheibe 11, welche das auf ihr montierte, mit Hohlfasern 15 gefüllte Gehäuse 14 rotativ bewegt, wird die pulverförmige Verödungsmasse 17 gleichmäßig verteilt gegen die Kappe 13 gedrückt. Durch Einbringen von Wärme schmilzt die polymere Verödungsmasse 17 auf. Das Metallgewebe 16, welches für die Verödungsmasse 17 durchlässig ist, wird von der Verödungsmasse 17 durchtränkt. Weiterhin umschließt die Verödungsmasse 17 die Hohlfasern 15 ca. 2mm in ihren Endbereichen, wobei sie auch in das Innere der Hohlfasern 15 eindringt und sie so verschließt, dass kein anderes Material mehr eindringen kann. Durch die ständige Rotation der Drehscheibe 11 bildet die Verödungsmasse 17 eine Schicht mit einer konstanten Schichtdicke.

Nachdem die Verödungsmasse 17 ausreichend erstarrt ist, wird über eine erste Verbindungsleitung 18, welche einerseits mit dem Gehäuse 14 und andererseits mit einem Vorratsbehälter 19 verbunden ist, eine Vergussmasse 20 in das Gehäuse 14 eingebracht. Die Verbindungsleitung 18 ist in einem stirnseitennahen Bereich mit dem Gehäuse 14 verbunden, wobei jedoch darauf zu Achten ist, dass die Verbindungsleitung 18 zwischen der Verödungsmasse 17 und dem Drehmittelpunkt Z der Drehscheibe 11 einmündet. Die in dem Vorratsbehälter 19 enthaltene Vergussmasse 20 wird unter Druck über die erste Verbindungsleitung 18, welche zumindest teilweise im Drehmittelpunkt Z der Drehscheibe 11 angeordnet ist, in das Gehäuse 14 gepresst. Der Druck, mit welchem die Vergussmasse 20 in die erste Verbindungsleitung 18 eingebracht wird, kann z.B. durch Extruder, Kolben oder andere Pumpeneinrichtungen erzeugt werden. Es ist jedoch auch denkbar, dass die Zuführung ohne gesondert erzeugten Druck erfolgt. Hierbei kann der erforderliche Druck durch die Zentrifugalkraft, ohne andere Pumpeneinrichutngen, erzeugt werden. Die Zuführung der Vergussmasse 20 über den Drehmittelpunkt Z ist besonders vorteilhaft für hochviskose Medien. Die durch die Rotation der Drehscheibe 11 entstehenden Zentrifugalkräfte drücken die Vergussmasse 20 nach außen gegen die Verödungsmasse 17. Dadurch wird eine gleichmäßige Schichtdicke der Vergussmasse 20 erzielt. Da die Verödungsmasse 17 die Enden der Hohlfasern 15 verschließen, kann keine Vergussmasse 20 in das Innere der Hohlfasern 15 eindringen und einen irreversiblen Verschluss verursachen.

In der ersten Verbindungsleitung 18 ist zwischen dem ersten Vorratsbehälter 19 und dem Gehäuse 14 ein Ventil 21 angeordnet. Dieses Ventil 21 ist angesteuert und kann die Verbindungsleitung 18 öffnen oder verschließen, so dass eine definierte Menge der Vergussmasse 20 in das Gehäuse 14 geführt werden kann. Nachdem eine ausreichende Menge an Vergussmasse 20 in dem Gehäuse 14 vorhanden ist, verschließt das Ventil 21 die Verbindungsleitung 18. Wenn die Vergussmasse 20 ausreichend erstarrt ist, was z.B. durch Wärmeeinwirkung begünstigt wird, wird eine Dichtungsmasse 22 in das Gehäuse 14 eingebracht. Diese Dichtungsmasse 22 ist in einem zweiten Vorratsbehälter 24 gespeichert, wobei dieser über eine zweite Verbindungsleitung 23 mit dem Gehäuse 14 verbunden ist. In dieser zweiten Verbindungsleitung 23 ist, wie auch in der ersten Verbindungsleitung 18 ein Ventil 25 angeordnet. Das Ventil 25 öffnet die zweite Verbindungsleitung 23, wenn die Dichtungsmasse 22 in das Gehäuse 14 geleitet werden soll. Zum Einbringen der Dichtungsmasse 22 kann, wie auch bei der Vergussmasse 20, Druck erforderlich sein, welcher durch z.B. Kolben oder andere Pumpeinrichtungen aufgebracht wird. Vorzugsweise erfolgt die Zuführung jedoch aufgrund der Zentrifugalkraft, ohne weitere Pumpeneinrichtungen.

Die Dichtungsmasse 22 wird ebenfalls durch die Zentrifugalkraft nach außen gedrückt. Dort dringt die Dichtungsmasse 22 in die, in der Vergussmasse 20 enthaltenen Poren ein, füllt diese auf und bildet anschließend eine dichtende Schicht.

An der ersten Verbindungsleitung 18 ist außerhalb des Schleuderraums 10 eine Gasleitung 26 angeschlossen, welche über ein Regelventil 27 verfügt. Die Gasleitung 26 ist mit einem Gasspeicher 28 verbunden. In diesem Gasspeicher 28 ist ein Spülgas enthalten, welches eine sehr hohe Temperatur aufweist. Nachdem das Ventil 21 den Zustrom der Vergussmasse 20 in die erste Verbindungsleitung 18 unterbricht, wird das Regelventil 27 geöffnet, wodurch das Spülgas mit hohem Druck die in der ersten Verbindungsleitung 18 enthaltene Vergussmasse 20 in das Gehäuse 14 drückt. Durch die hohe Temperatur des Spülgases wird der Schleuderraum 10 beheizt, wodurch die Vergussmasse 20 schneller erstarrt. In gleicher Weise ist auch die zweite Verbindungsleitung 23 mit einer zweiten Gasleitung 29, einem zweiten Regelventil 30 und einem zweiten Gasspeicher 31 verbunden.

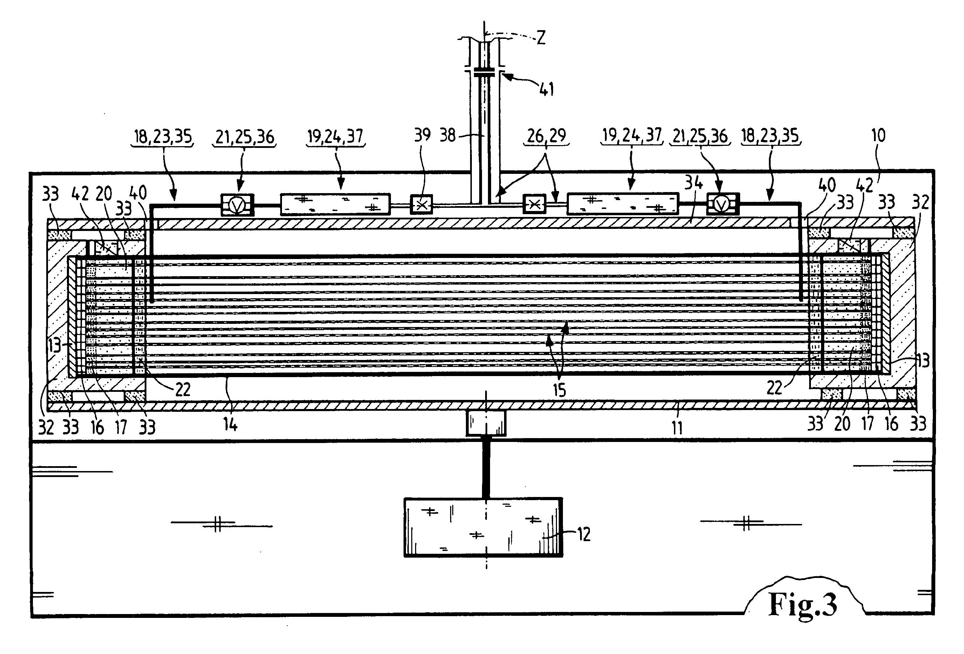

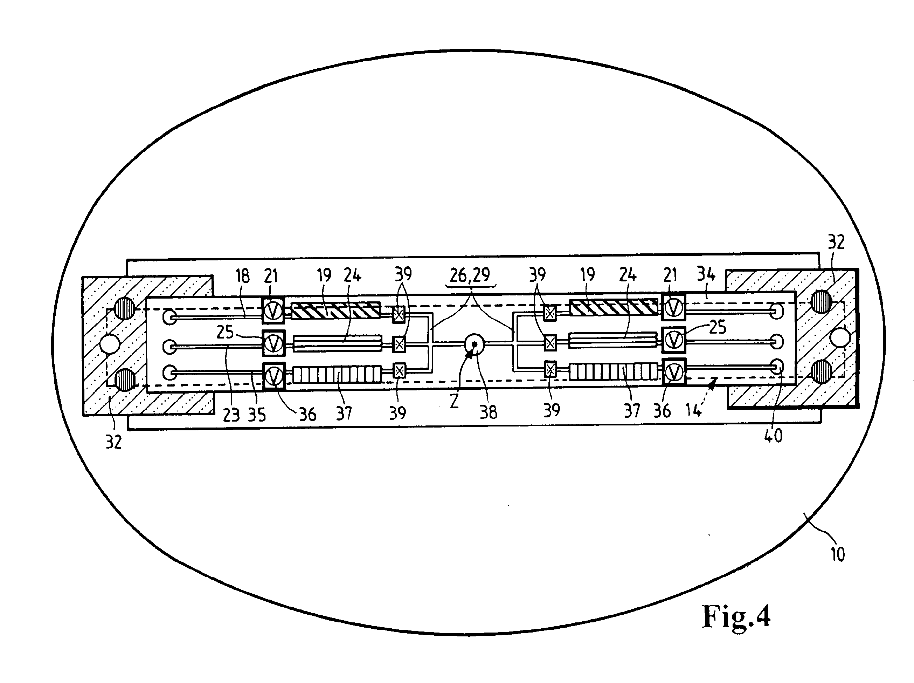

In Figur 3 ist ein schematischen Aufbau einer Vorrichtung zur Herstellung eines Hohlfasermembranmoduls in der Seitenansicht und in Figur 4 in der Draufsicht dargestellt. Den Figuren 1 und 2 entsprechende Bauteile sind mit gleichen Bezugszeichen versehen. Bei diesem Ausführungsbeispiel sind die Kappen 13, welche z.B. aus Keramik oder hochtemperaturbeständigem Edelstahl bestehen, mit Heizpatronen 32 beheizbar. Damit sich die Kappen 13 besser von den vergossenen Massen lösen lassen, kann ein Trennmittel, welches z.B. ein Graphit- oder Bornitridspray ist, auf die Innenflächen der Kappen 13 aufgebracht werden.

Damit die durch die Heizpatronen 32 eingebrachte Wärmeenergie größtenteils auf die Kappen 13 übergeht, sind thermische Entkoppler 33 vorgesehen. Diese sind zwischen der Drehscheibe 11 und den Heizpatronen 32 angeordnet. Weiterhin ist oberhalb des Gehäuses 14 eine Deckplatte 34 vorgesehen, welche ebenfalls mit thermischen Entkopplern 33 zu den Heizpatronen 32 beabstandet sind. Um sicherzustellen, dass stets die optimale Temperatur an den Endbereichen der Hohlfasern 15 besteht, sind Thermofühler 42 angeordnet, welche die Temperatur erfassen. Sobald die Temperatur unter einen SollWert absinkt wird über eine Elektronik (nicht dargestellt) die Heizpatrone 32 angesteuert, welche die Endbereiche wieder auf die erforderliche Temperatur erwärmen bzw. bei Heiz-/Kühlpatronen abkühlen. Oberhalb der Deckplatte 34 sind die Verbindungsleitungen 18, 23 angeordnet, welche zu dem jeweiligen Vorratsbehälter 19, 24 führen. Die Ventile 21, 25 dienen der Zudosierung der einzelnen Massen 20, 22. Bei diesem Ausführungsbeispiel wird die Verödungsmasse 17, wie auch die Vergussmasse 20 und die Dichtungsmasse 22 erst in das Gehäuse 14 eingebracht, wenn die Drehscheibe 11 rotiert. Daher ist für die Verödungsmasse 17 ebenfalls eine Verbindungsleitung 35, ein Ventil 36 und ein Vorratsbehälter 37 vorzusehen. Die Ventile 21, 25, 36 sind elektropneumatisch betätigt. Die Deckplatte 34 verfügt über Öffnungen 40, durch welche die Massen 17, 20, 22 hindurch geleitet und in das Gehäuse 14 eingebracht werden können.

Um die Massen 17, 20, 22 aus den Vorratsbehältern 19, 24, 37 heraus und in das Gehäuse 14 einzubringen, sind die Gasleitungen 26, 29 vorgesehen, welche auch bei hohen Temperaturen hohen Drücken widerstehen können. Die Gasleitungen 26, 29 werden von einer zentralen Druckluftleitung 38 gespeist. Damit kein zu großer Druck auf die einzelnen Vorratsbehälter 19, 24, 37 einwirkt, sind in den Gasleitungen 26, 29 zwischen der Druckluftleitung 38 und den Vorratsbehältern 19, 24, 37 Nadelventile 39 angeordnet, welche den, in die Vorratsbehälter 19, 24, 37 eingeleiteten Druck reduzieren. Hierbei kann jeder Vorratsbehälter 19, 24, 37 mit einem anderen Druck beaufschlagt werden. Die zentrale Druckluftleitung 38, welche auf dem Drehmittelpunkt Z angeordnet ist, ist über einen Gleitschuh 41 mit einer Überdruckquelle verbunden. Der Gleitschuh 41 bewirkt eine kontinuierliche Druckluftversorgung, wobei bei besonderen Ausgestaltungen auch die Stromversorgung der Vorrichtung über den Gleitschuh 41 erfolgen kann, bevorzugt ist aber eine Stromversorgung über Gleitschuhe bzw. Schleifkontakte von unterhalb des Rotors (nicht dargestellt).

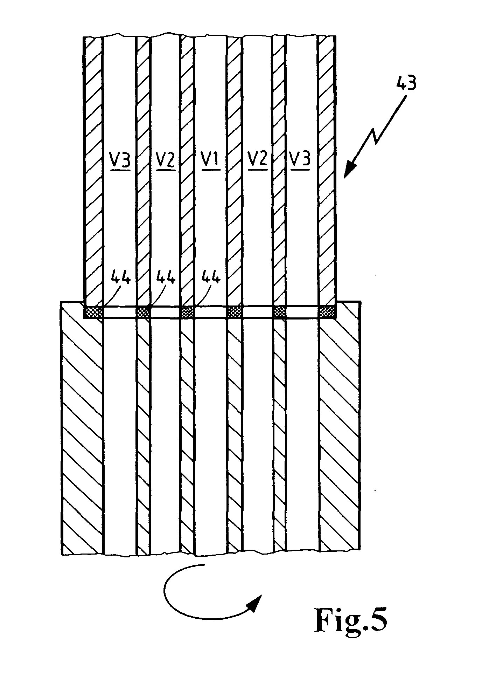

In Figur 5 ist eine Zuführleitung 43 aus einem temperaturbeständigen Stahl im Schnitt dargestellt. Diese Zuführleitung 43 ist zweiteilig ausgeführt, wobei zwischen den beiden Teilen Dichtungen 44 aus z.B. Teflon vorgesehen sind. Die Dichtungen 44 sind kreisringförmig ausgeführt. Sie verfügen über gute Gleiteigenschaften, um das Drehen des einen Teils auf dem anderen zu ermöglichen. Hierbei ist das obere Teil ortsfest und das untere Teil rotiert mit der Drehscheibe 11 gemäß den Figuren 1 bis 4. Die Zuführleitung 43 ist in drei dichtend voneinander getrennte Volumina V1, V2, V3 unterteilt, wobei V2 und V3 eine kreisringförmige Querschnittsfläche aufweisen.

In Figur 6 ist eine Temperaturverlaufskurve, welche einen kompletten Zyklus zur Herstellung eines Hohlfasermembranmoduls bildet, dargestellt. Auf der X-Achse ist der zeitliche Verlauf t eines Zykluses in Minuten und auf der Y-Achse die vorherrschende Temperatur T in °C abgetragen. Der Zyklus startet bei Raumtemperatur. Im Bereich a, welcher ca. 15min dauert, erfolgt eine Aufheizung bis auf ca. 200°C. Ab einer Temperatur von ca. 180°C wird die Verödungsmasse eingebracht. Nachdem die Verödungsmasse eingebracht ist, erfolgt im Bereich b eine Abkühlung auf ca. 150°C. Die Abkühlungszeit beträgt ebenfalls 15min. Im Bereich c wird die Vergussmasse eingebracht und ausgehärtet. Nach dem Aushärten erfolgt im Bereich d eine weitere Abkühlung auf ca. 50°C. Im Bereich e, welcher relativ konstant auf 50°C gehalten wird, erfolgt die Zugabe der Dichtmasse, welche die Poren der Vergussmasse verschließt. Nachdem die Dichtmasse ebenfalls ausgehärtet, bzw. ein Gel gebildet hat, ist der Zyklus in der Vorrichtung zur Herstellung eines Hohlfasermembranmoduls beendet. Die weitere Bearbeitung erfolgt mechanisch, wobei ein Sintervorgang vorgesehen ist, welcher der Vergussmasse und der Dichtungsmasse ihre geforderten Eigenschaften verleiht.

In Figur 7 ist eine schematische Vorrichtung zur Herstellung mehrerer Hohlfasermembranmodulen dargestellt. Bei dieser Vorrichtung sind mehrere, mit Hohlfasern 15 gefüllte Gehäuse 14 gleichzeitig auf einer Drehscheibe 11, welche in einem temperierten Schleuderraum 10 angeordnet ist, montiert. Die Gehäuse 14 sind strahlenförmig um den Drehmittelpunkt Z angeordnet, in welchem eine zentrale Versorgung, welche die erforderlichen Verödungs-, Verguss- und Dichtungsmassen an die einzelnen Gehäuse 14 weiterleitet, angeordnet ist. Die zentrale Versorgung 45 ist analog den in den Figuren 3 und 4 aufgebauten Leitungssystemen aufgebaut, wobei bei jedem Gehäuse 14 ein Vorratsbehälter 19 angeordnet ist, in welchem die für das jeweilige Gehäuse erforderliche Masse zwischengespeichert wird. Jedes Gehäuse 14 wird an seiner nach außen zeigenden Kappe 13 mit einer gesonderten Heizpatrone 32 erwärmt.

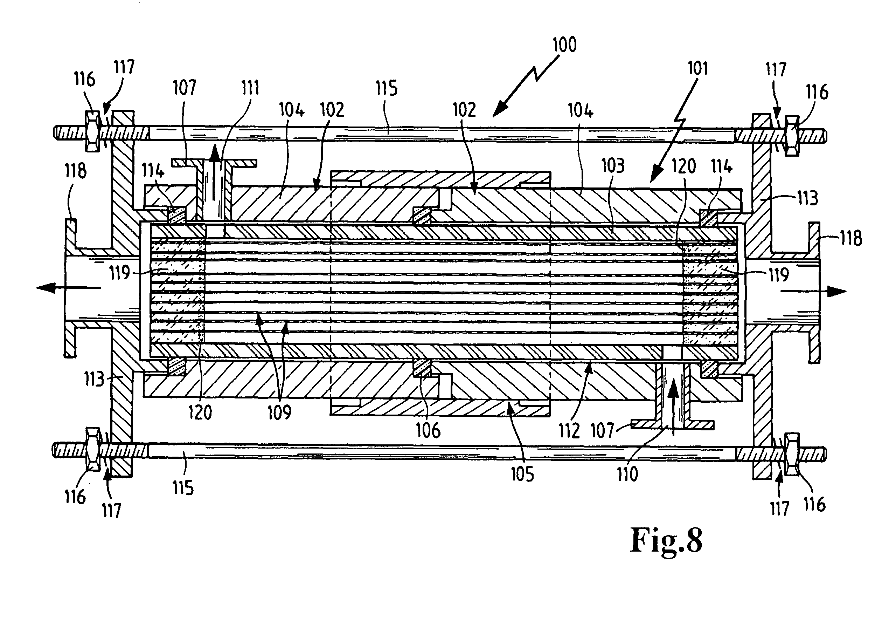

In Figur 8 ist ein nicht-erfindungsgemäßes Hohlfasermembranmodul 100, welches zur Reinigung eines Fluides, oder für chemische Umsetzungen, z.B. der Katalyse, vorgesehen ist, im Schnitt dargestellt. Dieses Hohlfasermembranmodul weist ein Gehäuse 101 auf, welches aus einer zweiteiligen, äußeren Gehäuseschale 102 und einer inneren Gehäuseschale 103 besteht. Die äußere Gehäuseschale 102 verfügt über zwei Gehäusehälften 104, welche mit einer Klemmvorrichtung 105 zusammengeklemmt sind. Beide Gehäusehälften 104 bestehen aus einem hochtemperaturbeständigen Edelstahl. Die Klemmvorrichtung 105, welche nur schematisch dargestellt ist, besteht aus Stahl und ist somit ebenfalls Hochtemperaturbeständig. Um die beiden Gehäusehälften 104 zusammenzuspannen können alle bekannten Verfahren wie z.B. Schnappverbindungen oder Schraubverbindungen verwendet werden. Zwischen den Gehäusehälften 104 ist ein Dichtungsmittel 106 vorgesehen, welches die beiden Gehäusehälften 104 zueinander abdichtet. Außerdem liegt das Dichtungsmittel 106 dichtend auf der inneren Gehäuseschale 103 auf. Dieses Dichtungsmittel 106 besteht aus einem hochtemperaturbeständigen Material wie Graphit oder hochtemperaturbeständige Kunststoffe wie z.B. Kalrez. Die innere Gehäuseschale 103 besteht ebenfalls aus einem hochtemperaturbeständigen Material wie Keramik, wobei dieses Material einen ähnlichen Wärmeausdehungskoeffizienten besitzt, wie die in der inneren Gehäuseschale 103 angeordneten Hohlfasern 109, welche aus einem anorganischen Material wie Aluminiumoxid, Zirkonoxid, Siliciumcarbit oder Siliciumoxid bestehen. Die Hohlfasern 109 sind nach einem beliebigen im Stand der Technik bekannten Verfahren herstellbar, wobei sie eine für ein Permeat durchlässige Wand aufweisen. An jeder Gehäusehälfte 104 ist ein Anschlussstück 107 angeordnet, wobei das eine Anschlussstück 107 den Einlass 110 und das andere Anschlussstück 107 den Auslass 111 bildet. Da zwischen der inneren Gehäuseschale 103 und der äußeren Gehäuseschale 104 ein Ringraum 112 gebildet ist, trennt das Dichtungsmittel 106 den Einlass 110 dichtend von dem Auslass.

Das Gehäuse 101 ist an beiden Stirnseiten mit jeweils einem Flansch 113 verschlossen, wobei zwischen dem Flansch 113 und dem Gehäuse 101 ein hochtemperaturbeständiger Dichtungsring 114 angeordnet ist, welcher insbesondere dem Dichtungsmittel 106 in seinen Abmessungen und seinem Werkstoff entspricht. Die Flansche 113 sind mit mindestens drei Gewindestangen 115 miteinander verschraubt. Hierbei sind die Gewindestangen durch den Flansch 113 hindurch gesteckt und mit Muttern 116 verschraubt, wobei zwischen dem Flansch 113 und den Muttern 116 Spannringe 117 angeordnet sind, welche die Flansche 113 trotz Wärmeausdehnungen der Materialien bei der Herstellung und dem Betrieb noch verspannen. Die Gewindestangen 115, Muttern 116 und Spannringe 117 bestehen aus einem hochtemperaturbeständigen Material wie z.B. Edelstahl. An den Flanschen 113 ist jeweils ein Permeatauslass 118 angeordnet, wobei auch nur an einem Flansch 113 ein Permeatauslass 118 vorgesehen sein kann.

Die in der inneren Gehäuseschale 103 angeordneten Hohlfasern 109 sind mit einer Vergussmasse aus Aluminiumoxid 119, welches hochtemperaturbeständig ist, fixiert, wobei die Hohlfaserenden an ihren Stirnseiten nicht verschlossen sind, da die Hohlfasern 109 nach einem der oben beschriebenen Verfahren in die innere Gehäuseschale 103 eingebracht sind. Die Schicht aus Aluminiumoxid 119 ist mit einer Dichtungsmasse aus einem Sol/Gel 120 auf Siloxanbasis abgedichtet, somit kann keine Verunreinigung zu dem Permeatauslass 118, welcher korrespondierend mit den Hohlräumen der Hohlfasern 109 verbunden ist, gelangen.

Durch den zweischaligen Aufbau besitzt das beschriebene Hohlfasermembranmodul 100 die Eigenschaft, dass unterschiedliche Wärmeausdehnungen zwischen den einzelnen Bauteilen kompensiert werden. Da die Hohlfasern 109 aus einem keramischen Material bestehen, welches zwar sehr verschleißfest und hitzebeständig, jedoch auch sehr spröde ist, müssen alle Bauteile, welche fest mit den Hohlfasern 109 verbunden sind, einen ähnlichen Wärmeausdehnungskoeffizienten wie diese aufweisen. Bei sehr unterschiedlichen Wärmeausdehnungskoeffizienten würden sonst die Hohlfasern 109 beschädigt, wenn das Hohlfasermembranmodul 100 großen Temperaturschwankungen ausgesetzt wird. Daher werden sowohl für die Vergussmasse, als auch für die innere Gehäuseschale Materialien verwendet, welche ähnlich den der Hohlfasern sind. Diese Materialien, insbesondere Keramiken sind jedoch sehr stoßempfindlich und lassen sich mechanisch nur sehr schlecht bearbeiten. Dadurch könnten Anschlüsse nur sehr schlecht angebracht werden. Daher wird für die äußere Gehäuseschale 102 ein mechanisch einfach zu bearbeitendes Material gewählt, welches relativ zäh ist. Dieses Material, wie z.B. Edelstahl, besitzt jedoch einen wesentlich größeren Wärmeausdehnungskoeffizienten. Damit diese äußere Gehäuseschale 102 sich weiter ausdehnen kann, als die innere Gehäuseschale 103, ist die innere Gehäuseschale 103 über die Dichtungsringe 114 bzw. das Dichtungsmittel 106 in dem äußeren Gehäuse 102 gelagert. Alle Bauteile sind derart aufeinander abgestimmt, dass Wärmeausdehnungen zu keiner Beschädigung führen. Auch die Flansche 113 sind derart verspannt bzw. an den Dichtringen 114 abgestützt, dass Wärmeausdehnungen kompensiert werden.

Das zu reinigende Fluid tritt mit einem hohem Druck von z.B. 5 bis 30bar durch den Einlass 110 in das Hohlfasermembranmodul 100 ein. Von dem Einlass 110 wird es in das Innere der inneren Gehäuseschale 103 geleitet. Das Fluid umströmt die im Inneren der inneren Gehäuseschale 103 angeordneten Hohlfasern 109. Durch den hohen Druck wird das Fluid gegen die Hohlfasern 109 gedrückt, wobei das Permeat, für welches die Hohlfasern 109 durchlässig ist, hindurchtritt. Das restliche Fluid, welches nicht durch die Hohlfasern 109 hindurchgetreten ist, enthält somit eine höhere Konzentration an Verunreinigungen. Dieses aufkonzentrierte Fluid tritt durch den Auslass 111 wieder aus dem Hohlfasermembranmodul 100 aus. Durch das ständige Umspülen der Hohlfasern 109 weisen diese Hohlfasermembranmodule 100 eine lange Lebensdauer auf. Weiterhin kann bei dem beschriebenen Aufbau eines Hohlfasermembranmoduls 100 bei Bedarf auch nur die innere Gehäuseschale 103 mit den Hohlfasern 109 ausgetauscht werden, was kostengünstiger ist.

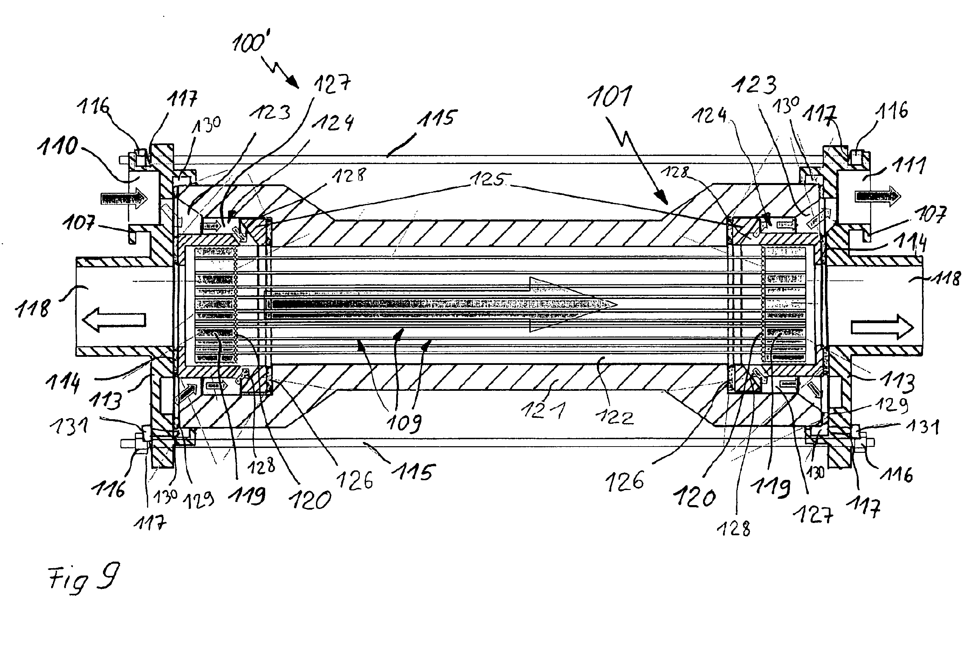

In Figur 9 ist eine weitere Ausgestaltung des Hohlfasermembranmoduls 100' im Schnitt dargestellt. Der Figur 8 entsprechende Bauteile sind mit gleichen Bezugszeichen versehen. Das Hohlfasermembranmodul 100' unterscheidet sich von dem in Figur 8 dargestellten Hohlfasermembranmodul 100 in der Ausgestaltung des Gehäuses 101 und in der Art der Anströmung der Hohlfasern 109. Das Gehäuse 101 des Hohlfasermembranmoduls 100' besitzt einen knochenförmig ausgebildeten Gehäusekörper 121 aus hochtemperaturbeständigem Material, insbesondere Aluminium. Besonders vorteilhaft ist eine mögliche Herstellung des Gehäusekörpers 121 aus spröden, hochtemperaturbeständigen Materialien wie z.B. Keramiken, welche mechanisch schwer zu bearbeiten sind. Da keine Hinterschneidungen, Bohrungen, Gewinde o.ä. vorhanden sind, kann eine Herstellung des Gehäusekörpers 121 einfach, z.B. durch Pressen oder andere keramische Technologien, hergestellt werden. Der Gehäusekörper 121 weist eine durchgehende zylindrische Bohrung 122 auf. Die zylindrische Bohrung 122 ist in ihren Endbereichen 124 größer ausgebildet, wobei ein Fasenbereich 123 an den Endbereich 124 anschließt. Die Außenkontur des Gehäusekörpers 121 ist an die durch die Bohrung 122 und die Endbereiche 124 gebildete Innenkontur angepasst, dadurch kann Material eingespart bzw. das Gewicht reduziert werden. Die Innenkontur des Gehäusekörpers 121 ist einfach mechanisch, durch z.B. Drehen, herstellbar, da keine Hinterschneidungen vorhanden sind. In den Endbereichen 124 ist jeweils ein Anströmring 125 angeordnet. Die Anströmringe 125 sind als rotationssymetrisches Bauteil ausgebildet und bestehen ebenfalls aus einem hochtemperaturbeständigen Material. Besonders vorteilhaft ist eine Herstellung der Anströmringe 125 aus spröden, hochtemperaturbeständigen Materialien, welche mechanisch schwer zu bearbeiten sind, wie z.B. Keramiken. Da keine Hinterschneidungen, Gewinde o.ä. vorhanden sind, kann eine Herstellung der Anströmringe 125 einfach, z.B. durch Pressen oder andere keramische Technologien, hergestellt werden. Die Anströmringe 125 sind dichtend in die Endbereiche 124 des Gehäuses 121 eingebracht, wobei zwischen den Anströmringen 125 und dem Gehäuse 121 Dichtmittel 126 angeordnet sind. Die Dichtmittel 126 bestehen aus einem hochtemperaturbeständigen Material wie z.B. aus Graphit oder Glasloten auf Basis von z.B. Bleiboraten, Silicaten, Borosilicaten oder aus dem System Bariumoxid-Calciumoxid-Siliziumdioxid. Weiterhin ist ein Strömungsquerschnitt 127 zwischen dem Gehäuse 121 und dem Anströmring 125 gebildet, welcher mit dem Einlass 110 bzw. dem Auslass 111 kommuniziert. Der Einlass 110 und Auslass 111 sind in dem jeweiligen Anschlussstück 107 angeordnet, wodurch der Gehäusekörper 121 über keine Gewinde, radiale Bohrungen oder sonstige Anschlüsse verfügen muss. In dem Strömungsquerschnitt 127 kann sich das einströmende Fluid nach dem Einlass 110 gleichmäßig verteilen. Um eine gleichmäßige Außen-Anströmung der Hohlfasern 109 zu erzielen besitzen die Anströmringe 125 mindestens zwei Durchbrüche 128, welche gleichmäßig am Umfang der Anströmringe 125 verteilt angeordnet sind. Je mehr Durchbrüche 128 in den Anströmringen 125 angeordnet sind, desto gleichmäßiger werden die Hohlfasern 109 über den gesamten Umfang des Anströmringes 125 gleichförmig angeströmt, daher sind auch Anströmringe 125 mit drei, vier oder mehr Durchbrüchen 128 besonders vorteilhaft.

Die Hohlfasern 109 sind an ihren Enden in den Anströmringen 125 fixiert, wobei die Vergussmasse 119 und die Dichtungsmasse 120 direkt mit den Anströmringen 125 verbunden ist. Um eine gute Haftung der Vergussmasse 119 auf dem Anströmring 125 zu erzielen, kann dieser aus einem auf die Vergussmasse 119 abgestimmten Material wie Aluminiumoxid bestehen. Da die Hohlfasern 109 in den Anströmringen 125 gelagert sind und keine feste Verbindung zu dem Gehäusekörper 121 aufweisen, wirken sich unterschiedliche Wärmeausdehnungskoeffizienten zwischen den Hohlfasern 109 und dem Gehäusekörper 121 nicht zerstörerisch aus, daher kann der Gehäusekörper 121 aus einem anderen Material gefertigt werden. Die Anströmringe 125 können in dem Gehäusekörper 121 geringfügige axiale Wege zurücklegen, wodurch axiale Toleranzen, welche durch unterschiedliche Wärmeausdehnungen entstehen, ausgeglichen werden können.

Bei weiteren Ausgestaltungen können die Anströmringe 125 in ihrem Inneren über strukturierte Oberflächen oder Nuten (nicht dargestellt) verfügen, um eine bessere mechanische Haftung der Vergussmasse 119 auf den Anströmringen 125 zu erzielen. Zur Verbesserung der Dichtigkeit zwischen den Anströmringen 125 und der Vergussmasse 119 kann eine zusätzliche Dichtung in den Flansch 113 (nicht dargestellt) eingebracht werden. Diese zusätzliche Dichtung könnte auch durch einen umgestalteten Dichtungsring 114, welcher dann sowohl den Anströmring 125 zu dem Flansch 113, als auch den Anströmring 125 zu der Vergussmasse 119 abdichtet.

Um ein Oxidieren der zwischen dem Gehäusekörper 121 und dem Flansch 113 angeordneten ringförmigen Dichtungen 129 zu verhindern, können ringförmige Kammern 130 vorgesehen sein, welche die Dichtungen 129 zu der umgebenden Atmosphäre hin abschirmen. Die Kammern 130 können über einen Anschluss 131 mit einem reduzierenden Gas, wie z.B. Wasserstoff oder einem chemisch innerten Gas wie z.B. Wasserstoff/Stickstoff gefüllt werden, wodurch die Dichtungen 129 durch eine äußere, oxidierende oder anderweitig schädliche Atmosphäre nicht angegriffen und zerstört werden können. Die umspülten Dichtungen verfügen so über eine längere Lebensdauer oder aber, wie im Falle von Graphitdichtungen, über eine höhere Einsatztemperatur.

Bei anderen, nicht dargestellten Ausgestaltungen kann auch nur Einlassseitig ein Anströmring angeordnet sein. Abströmseitig ist eine einzige Austrittsöffnung ausreichend.

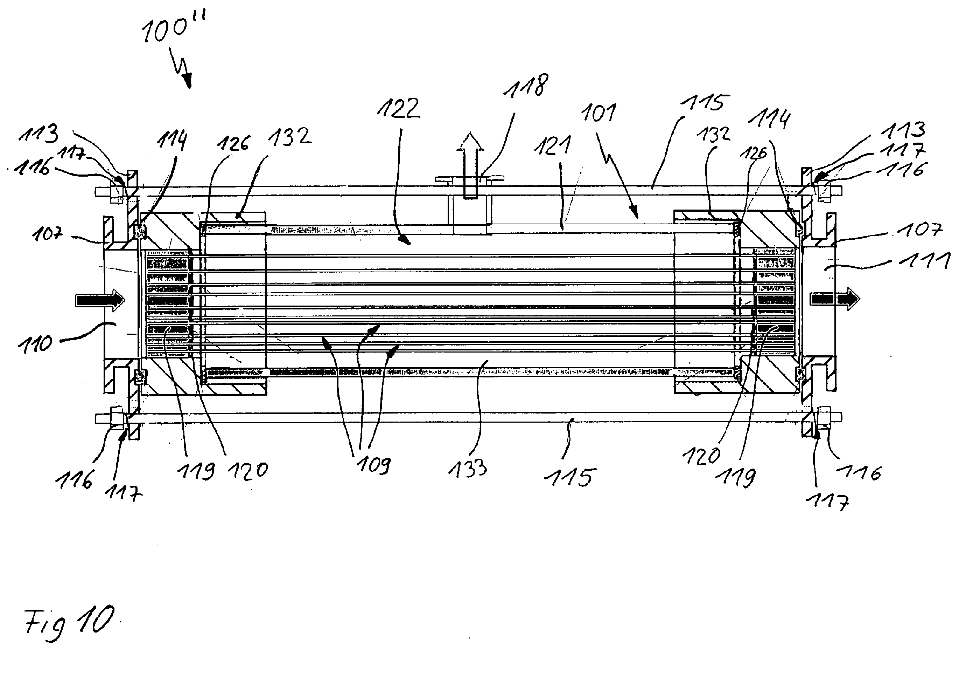

In Figur 10 ist eine alternative Ausgestaltung des Hohlfasermembranmoduls 100" im Schnitt dargestellt. Der Figur 8 bzw. 9 entsprechende Bauteile sind mit gleichen Bezugszeichen versehen. Bei diesem Ausführungsbeispiel weist das Gehäuse 101 den Gehäusekörper 121 und Zylinderkappen 132 auf. Der Gehäusekörper 121 ist als einfach herzustellender Hohlzylinder ausgebildet, an dessen Stirnseiten die Zylinderkappen 132 angeordnet sind. Die Zylinderkappen 132, welche ebenfalls einfach herstellbar sind, umschließen den Umfang des Gehäusekörpers 121 in einem Teilbereich. Zwischen den Zylinderkappen 132 und dem Gehäusekörper 121 sind Dichtmittel 126 angeordnet, welche verhindert, dass das Permeat unkontrolliert austreten kann. Weiterhin ist der Dichtungsring 114 zwischen dem Flansch 113 und der Zylinderkappe 132 angeordnet. Die Hohlfasern 109 durchragen den Gehäusekörper 121 und sind mit der Vergussmasse 119 und der Dichtungsmasse 120 in den Zylinderkappen 132 fixiert. Der hohlzylindrische Gehäusekörper 121 besteht aus einem hochtemperaturbeständigen Material wie Keramik, welche einen ähnlichen Wärmeausdehnungskoeffizienten wie die Hohlfasern 109 aufweist,. Dieses Material kann vorteilhaft aus einem leicht zu bearbeitenden Metall hergestellt werden, daher ist die Anbringung eines Permeatauslasses 118 unproblematisch. Der Durchmesser des Gehäusekörpers 121 größer ist, als der Durchmesser der gebündelten Hohlfasern 109. Dadurch kann sich das Permeat in dem sich bildenden Zwischenraum 133 sammeln, bevor es durch den Permeatauslass 118 ausgetragen wird. Die Zylinderkappen 132 können aus hochtemperaturbeständigem Edelstahl gefertigt werden, wobei der Wärmeausdehnungskoeffizient der Zylinderkappen 132 nahezu gleich dem Wärmeausdehnungskoeffizienten der Hohlfasern 109 sowie der Vergussmasse 119 sein soll. Dadurch wird die Entstehung von Rissen in der Vergussmasse bzw. Beschädigungen der Hohlfasern verhindert. Die Materialwahl für die Zylinderkappen 132 ist derart zu treffen, dass die Vergussmasse 119 und die Dichtungsmasse 120 fest auf den Zylinderkappen 132 haften und eine dichte Verbindung erzeugen.

Bei diesem Ausführungsbeispiel strömt das zu reinigende Fluid durch den koaxial angeordneten Einlass 110 in dem Flansch 113 in das Hohlfasermembranmodul 100" ein und trifft auf die offenen Stirnseiten der Hohlfasern 109. Das Fluid durchströmt das Innenvolumen der Hohlfasern 109. Durch den am Permeatauslass 118 anliegende Unterdruck strömt das Permeat durch die Wandung der Hohlfasern 109 und kann durch den Permeatauslass 118, welcher mit dem Gehäusekörper 121 verbunden ist, aus dem Hohlfasermembranmodul 100" austreten. Das aufkonzentrierte Fluid strömt zu dem Aulsass 111 und verlässt so das Hohlfasermembranmodul 100". Wie in Figur 9 beschrieben, können die Dichtungsringe 114 ebenfalls mit einem reduzierenden Gasgemisch gespült werden, um so die Lebensdauer der Dichtungsringe 114 zu verlängern. Die hierfür erforderlichen Anschlüsse und Kammern sind einfach anzuordnen.

## Patentansprüche

1. Verfahren zur Herstellung eines Hohlfasermembranmoduls (100) für die Gastrennung oder andere Separationsverfahren bei erhöhten Temperaturen, aufweisend die folgenden Arbeitsschritte,
- Einbringen der Hohlfasern (15) in ein Gehäuse (14),
- Verschließen des Gehäuses (14) mit mindestens einer Kappe (13),
- Montieren des Gehäuses (14) auf einer Vorrichtung zur Herstellung des Hohlfasermembranmoduls (100),
- Rotieren des montierten Gehäuses (14) mit der Vorrichtung,
- Einbringen einer Vergussmasse (20) in das Gehäuse (14),
- Einbringen einer Dichtungsmasse (22) in das Gehäuse (14) und
- vor dem Einbringen der Vergussmasse (20) eine Verödungsmasse (17) in das Gehäuse (14) eingebracht wird, welche zum Verschließen der Hohlfasern (15) vorgesehen ist, wobei diese Verödungsmasse (17) und die Kappe (13) nach dem Einbringen der Vergussmasse (20) wieder entfernt wird
**dadurch gekennzeichnet, dass**
- die Hohlfasern (15) aus einem anorganischen, insbesondere keramischen Material bestehen,
- die verwendeten Verguss- und Dichtungsmassen (20), (22) aus einem anorganischen Material bestehen und die Vergussmasse (20) für Temperaturen größer 350°C beständig ist, wobei die Vergussmasse (20) eine Viskosität kleiner 15Pas aufweist und eine Schwindung zwischen Verarbeitung, Trocknung und Verfestigung kleiner 2% in jede Raumrichtung betragen soll, und wobei der Wärmeausdehnungskoeffizient der Vergussmasse (20), Hohlfaser (15) und dem Gehäuse (14) gleich sein soll, und
- Anschlussplatten (113) mit dem Gehäuse (14) verbunden werden.

2. Verfahren zur Herstellung eines Hohlfasermembranmoduls (100) nach Anspruch 1, **dadurch gekennzeichnet, dass** zwischen der Kappe (13) und den Hohlfasern (15) ein für die Verödungsmasse (17) durchlässiger Einsatz, insbesondere ein Metallgewebe (16) angeordnet wird, und nach dem Entfernen der Verödungsmasse (17) von dem Hohlfasermembranmodul (100) abgenommen wird.

3. Verfahren zur Herstellung eines Hohlfasermembranmoduls (100) nach einem der Ansprüche 1 oder 2, **dadurch gekennzeichnet, dass** die Verödungsmasse (17) mit einer Wärmebehandlung entfernt wird und dass die Hohlfasern (15) an ihren Hohlfaserenden, welche über die Vergussmasse (20) überstehen, abgebrochen werden.

4. Verfahren zur Herstellung eines Hohlfasermembranmoduls (100) nach einem der vorangehenden Ansprüche, **dadurch gekennzeichnet, dass** die Vergussmasse (20) zusätzlich zur Rotation unter Druck in das Gehäuse (14) eingebracht wird.

5. Verfahren zur Herstellung eines Hohlfasermembranmoduls (100), nach einem der vorangehenden Ansprüche, **dadurch gekennzeichnet, dass** die Herstellung des Hohlfasermembranmoduls (100) zumindest teilweise unter Wärmeeinwirkung, insbesondere durch einen Sintervorgang der eingebrachten Massen (20), (22) erfolgt.

6. Hohlfasermembranmodul (100) zur Reinigung eines Fluids bei Temperaturen bis zu 1200°C und/oder Lösungsmitteln oder extrem sauren bzw. basischen Chemikalien,
wobei das Hohlfasermembranmodul (100) gemäß dem Verfahren nach einem der Ansprüche 1 bis 5 hergestellt ist, aufweisend
- ein Gehäuse (101), in welchem Hohlfasern (109) angeordnet sind, wobei die Hohlfasern (109) mit einer Vergussmasse (119) in dem Gehäuse (101) fixiert sind und die Vergussmasse (119) mit einer Dichtungsmasse (120) abgedichtet ist,
- einen Einlass (110) für das zu reinigende Fluid,
- einen Auslass (111) für das aufkonzentrierte Fluid,
- einen Permeatauslass (118) für das gereinigte Fluid, und
**dadurch gekennzeichnet, dass**
- die Hohlfasern (109) aus einem anorganischen Material bestehen,
- die Verguss- und Dichtungsmasse (119), (120) aus einem anorganischen Material bestehen und die Vergussmasse (20) für Temperaturen größer 350°C beständig ist,
- das Gehäuse (14) an beiden Stirnseiten mit jeweils einem Flansch (113) verschlossen ist, welcher nach dem Einbringen der Vergussmasse (119) mit dem Gehäuse (101) verbunden ist, wobei das Gehäuse (101) über einen Gehäusekörper (121) und jeweils einen Anströmring (125) oder jeweils eine Zylinderkappe (132) in den Endbereichen verfügt, und wobei die Hohlfasern (109) mit der Vergussmasse (119) in dem Anströmring (125) bzw. der Zylinderkappe (123) fixiert sind.

7. Hohlfasermembranmadul (100) nach Anspruch 6, **dadurch gekennzeichnet, dass** der Anströmring (125) axial beweglich in dem Gehäusekörper (121) angeordnet sind.

8. Hohlfasermembranmodul (100) nach einem der Ansprüche 6 oder 7, **dadurch gekennzeichnet, dass** der Anströmring (125) in seinem Inneren über eine strukturierte Oberfläche verfügt, welche eine bessere Haftung der Vergussmasse (119) auf dem Anströmring (125) bewirkt.

## Claims

1. Procedure for manufacturing a hollow-fiber membrane module (100) for separating gas or for other separation procedures at increased temperatures, having the following steps,
- introduction of the hollow fibers (15) into a housing (14),
- closing of the housing (14) with at least one cap (13),
- mounting of the housing (14) onto a device for manufacturing the hollow-fiber membrane module (100),
- rotation of the mounted housing (14) with the device,
- introduction of a casting compound (20) into the housing (14),
- introduction of a sealing compound (22) into the housing (14), and
- before the introduction of the casting compound (20), introduction of a closing compound (17) into the housing (14) in order to close the hollow fibers (15), wherein this closing compound (17) and the cap (13) are removed after the casting compound (20) has been introduced,
**characterized in that**
- the hollow fibers (15) are made of an inorganic, in particular ceramic material,
- the casting and sealing compounds (20), (22) used are made of an inorganic material, and the casting compound (20) is resistant to temperatures above 350°C, wherein the casting compound (20) has a viscosity of less than 15 Pas and the shrinkage shall be less than 2% in every direction in space between the processing, drying, and hardening, and wherein the coefficient of thermal expansion of the casting compound (20), the hollow fiber (15), and the housing (14) shall be equal, and
- terminal boards (113) are connected to the housing (14).

2. Procedure for manufacturing a hollow-fiber membrane module (100) according to claim 1, **characterized in that** an insert, in particular a metal fabric (16) which is permeable for the closing compound (17), is located between the cap (13) and the hollow fibers (15) and that it is taken out after the closing compound (17) has been removed from the hollow-fiber membrane module (100).

3. Procedure for manufacturing a hollow-fiber membrane module (100) according to one of the claims 1 or 2, **characterized in that** the closing compound (17) is removed by a heat treatment and that the hollow fibers (15) are broken off at their hollow-fiber tips which protrude the casting compound (20).

4. Procedure for manufacturing a hollow-fiber membrane module (100) according to one of the above claims, **characterized in that** the casting compound (20) is not only introduced into the housing (14) by rotation, but also by pressure.

5. Procedure for manufacturing a hollow-fiber membrane module (100) according to one of the above claims, **characterized in that** the manufacturing of the hollow-fiber membrane module (100) takes place at least partly under thermal effect, in particular by a sintering process of the introduced compounds (20), (22).

6. Hollow-fiber membrane module (100) for purifying a fluid at temperatures of up to 1200°C and/or solvents, or extremely acid or basic chemicals, wherein the hollow-fiber membrane module (100) is manufactured in line with a procedure according to one of the claims 1 to 5, having
- a housing (101) in which hollow fibers (109) are located, wherein the hollow fibers (109) are fixed in the housing (101) with a casting compound (119), and the casting compound (119) is sealed with a sealing compound (120),
- an inlet (110) for the fluid to be purified,
- an outlet (111) for the concentrated fluid,
- a permeate outlet (118) for the purified fluid, and
**characterized in that**
- the hollow fibers (109) are made of an inorganic material,
- the casting and sealing compounds (119), (120) are made of an inorganic material, and the casting compound (20) is resistant to temperatures above 350°C,
- the housing (14) is closed on both faces with one flange (113) each, which is joined to the housing (101) after the casting compound (119) has been introduced, wherein the housing (101) has a housing body (121) and one flow ring each or one cylinder cap (132) each in the end areas, and wherein the hollow fibers (109) are fixed to the casting compound (119) in the flow ring (125) or the cylinder cap (123).

7. Hollow-fiber membrane module (100) according to claim 6, **characterized in that** the flow ring (125) in the housing body (121) is axially movable.

8. Hollow-fiber membrane module (100) according to one of the claims 6 or 7, **characterized in that** the flow ring (125) has a structured surface inside which improves the adhesion of the casting compound (119) to the flow ring (125).

## Revendications

1. Procédé de fabrication d' un module à membrane de fibres creuses (100) pour la séparation de gaz ou autres procédés de séparation à hautes températures, comprenant les opérations suivantes :
- introduction des fibres creuses (15) dans un boîtier (14),
- fermeture du boîtier (14) avec au moins un capuchon (13),
- montage du boîtier (14) sur un dispositif en vue de la fabrication du module à membrane à fibres creuses (100),
- rotation du boîtier monté (14) avec le dispositif,
- introduction d'une masse de scellage (20) dans le boîtier,
- introduction d' une masse d' étanchéité (22) dans le boîtier (14), et
- introduction dans le boîtier (14), avant l'introduction de la masse de scellage (20), d' une masse d'obturation (17) destinée à obturer les fibres creuses (15), cette masse d' obturation (17) et le capuchon (13) étant de nouveau retirés après l' introduction de la masse de scellage (20),
**caractérisé en ce que**
- les fibres creuses (15) sont faites en un matériau inorganique, en particulier céramique,
- les masses de scellage et d' étanchéité utilisées (20), (22) sont faites en un matériau inorganique et la masse de scellage (20) est résistante aux températures supérieures à 350°C, la masse de scellage (20) présentant une viscosité inférieure à 15 Pas et un retrait entre l' application, le séchage et le durcissement devant rester inférieur à 2% dans toutes les directions, et le coefficient de dilatation thermique de la masse de scellage (20), des fibres creuses (15) et du boîtier (14) devant être identique, et
- les plaques de raccordement (113) sont reliées au boîtier (14).

2. Procédé de fabrication d' un module à membrane de fibres creuses (100) selon la revendication 1, **caractérisé en ce qu'** un insert perméable à la masse d' obturation (17), en particulier un tissu métallique (16), est disposé entre le capuchon (13) et les fibres creuses (15) et démonté du module à membrane de fibres creuses (100) après le retrait de la masse d'obturation (17).

3. Procédé de fabrication d' un module à membrane de fibres creuses (100) selon une des revendications 1 ou 2, **caractérisé en ce que** la masse d' obturation (17) est retirée par un traitement thermique et que les fibres creuses (15) sont rompues au niveau de leurs extrémités qui dépassent de la masse de scellage (20).

4. Procédé de fabrication d' un module à membrane de fibres creuses (100) selon une des revendications précédentes, **caractérisé en ce que** la masse de scellage (20) est introduite dans le boîtier (14) non seulement par rotation, mais encore sous pression.

5. Procédé de fabrication d' un module à membrane de fibres creuses (100) selon une des revendications précédentes, **caractérisé en ce que** la fabrication du module à membrane de fibres creuses (100) est réalisée, tout au moins en partie, sous l' effet de chaleur, en particulier par une opération de frittage des masses introduites (20), (22).

6. Module à membrane de fibres creuses (100) pour le nettoyage d' un fluide à des températures pouvant atteindre 1200°C et/ou de solvants ou de produits chimiques extrêmement acides ou basiques, le module à membrane de fibres creuses (100) étant fabriqué suivant le procédé selon une des revendications 1 à 5, présentant
- un boîtier (101) dans lequel sont disposées des fibres creuses (109), les fibres creuses (109) étant fixées avec une masse de scellage (119) dans le boîtier (101) et la masse de scellage (119) étant étanchée avec une masse d' étanchéité (120),
- une entrée (110) pour le fluide à nettoyer,
- une sortie (111) pour le fluide concentré,
- une sortie de perméat (118) pour le fluide à nettoyer et
**caractérisé en ce que**
- les fibres creuses (109) sont faites en un matériau inorganique,
- la masse de scellage et la masse d' étanchéité (119), (120) sont faites en un matériau inorganique et la masse d' obturation (20) résiste à des températures supérieures à 350°C,
- le boîtier (14) est fermé, au niveau des deux faces frontales, avec respectivement une bride (113) qui est reliée avec le boîtier (101) après l' introduction de la masse de scellage (119), le boîtier (101) disposant d' un corps de boîtier (121) et respectivement d' une bague de soufflage (125) ou respectivement d' un capuchon de cylindre (132) aux extrémités, et les fibres creuses (109) étant fixées à la masse de scellage (119) dans la bague de soufflage (125) et/ou le capuchon de cylindre (123).

7. Module à membrane de fibres creuses (100) selon la revendication 6, **caractérisé en ce que** la bague de soufflage (125) est disposée en sens axial de manière mobile dans le corps du boîtier (121).

8. Module à membrane de fibres creuses (100) selon une des revendications 6 ou 7, **caractérisé en ce que** l' intérieur de la bague de soufflage (125) comporte une surface structurée qui a pour effet une meilleure adhérence de la masse de scellage (119) sur la bague de soufflage (125).
